(19) Europäisches Patentamt
European Patent Office
Office européen des brevets

(11) **EP 1 868 753 B1**

(12) **EUROPÄISCHE PATENTSCHRIFT**

(45) Veröffentlichungstag und Bekanntmachung des Hinweises auf die Patenterteilung:
**26.11.2008 Patentblatt 2008/48**

(21) Anmeldenummer: **06723408.8**

(22) Anmeldetag: **14.03.2006**

(51) Int Cl.:
**B22C 1/02** (2006.01)   **B22D 7/10** (2006.01)
**B22C 9/08** (2006.01)

(86) Internationale Anmeldenummer:
**PCT/EP2006/002329**

(87) Internationale Veröffentlichungsnummer:
**WO 2006/097278 (21.09.2006 Gazette 2006/38)**

(54) **EXOTHERME UND ISOLIERENDE SPEISEREINSATZE MIT HOHER GASDURCHLÄSSIGKEIT**

EXOTHERMIC AND INSULATING FEEDER INSERT HAVE HIGH GAS PERMEABILITY

MANCHONS POUR MASSELOTTES EXOTHERMIQUES ET ISOLANTS A GRANDE PERMEABILITE AUX GAZ

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.03.2005 DE 102005011644**

(43) Veröffentlichungstag der Anmeldung:
**26.12.2007 Patentblatt 2007/52**

(73) Patentinhaber: **AS Lüngen GmbH & Co. KG
56170 Bendorf am Rhein (DE)**

(72) Erfinder:
• **SKERDI, Udo
56170 Bendorf (DE)**
• **KROTH, Josef
56218 Mühlheim-Körlich (DE)**
• **REHSE, Henning
42929 Wermelskirchen (DE)**

(74) Vertreter: **Westendorp, Michael Oliver
Patentanwälte
Splanemann Reitzner
Baronetzky Westendorp
Rumfordstrasse 7
80469 München (DE)**

(56) Entgegenhaltungen:
**EP-A- 1 122 002        DE-A- 19 925 167**

**Beschreibung**

Die Erfindung betrifft eine Formmasse für die Herstellung von Formkörpern für die Gießereiindustrie, insbesondere isolierender oder exothermer Speiser und anderer Fülltrichter und Zufuhrelemente für Gießformen, ein Verfahren zum Herstellen solcher Formkörper für die Gießereiindustrie, Formkörper für die Gießereiindustrie, insbesondere Speiser, Fülltrichter und Zufuhrelemente für Gießformen, und die Verwendung solcher Formkörper für die Gießereiindustrie in einem Verfahren zum Gießen eines Metallteils.

Bei der Herstellung von Metallgussstücken in der Gießerei wird flüssiges Metall in eine Gießform eingefüllt. Beim Erstarrungsvorgang verringert sich das Volumen des eingefüllten Metalls. Daher werden regelmäßig sogenannte Speiser, d.h. offene oder geschlossene Räume in oder an der Gießform eingesetzt, um das Volumendefizit bei der Erstarrung des Gussstücks auszugleichen und eine Lunkerbildung im Gussstück zu verhindern. Dazu sind die Speiser mit dem Gussstück bzw. dem gefährdeten Gussstückbereich verbunden und gewöhnlich oberhalb bzw. an der Seite des Formhohlraums angeordnet.

Bei der Herstellung von Metallgussstücken, wird zunächst ein Modell hergestellt, dass in seiner Form im Wesentlichen dem herzustellenden Metallgussstück entspricht. An diesem Modell werden Zufuhrelemente und Speiser angebracht. Anschließend wird das Modell in einem Formkasten mit Formsand umgeben. Der Formsand wird verdichtet und dann ausgehärtet. Nach dem Aushärten wird die Gießform aus dem Formkasten entnommen. Die Gießform weist einen Formhohlraum bzw., sofern die Gießform aus mehreren Teilstücken aufgebaut ist, einen Teil des Formhohlraums auf, welcher im Wesentlichen einer Negativform des herzustellenden Metallgussstücks entspricht. Nachdem die Gießform ggf. zusammengesetzt wurde, wird in den Formhohlraum der Gießform flüssiges Metall eingefüllt. Das einfließende flüssige Metall verdrängt dabei die im Formhohlraum befindliche Luft. Die Luft entweicht durch in der Gießform vorgesehene Öffnungen oder durch poröse Abschnitte der Gießform, beispielsweise durch die Wand eines Speisers. Die Speiser weisen daher bevorzugt eine ausreichende Porosität auf, so dass einerseits beim Einfüllen des flüssigen Metalls dies in den Speiser einströmen kann und andererseits beim Abkühlen und Erstarren des Metalls im Formhohlraum der Gießform das noch flüssige Metall aus dem Speiser in den Formhohlraum nachströmen kann.

In der EP 0 888 199 B1 werden Speiser beschrieben, welche exotherme Eigenschaften oder isolierende Eigenschaften aufweisen können und die durch ein Cold-Box-Verfahren erhalten werden. Dazu wird ein Speisergemisch in eine Speisergussform eingefüllt. Das Speisergemisch umfasst ein oxidierbares Metall und ein Oxidationsmittel oder ein isolierendes feuerfestes Material oder Gemische dieser Materialien sowie eine wirksame Bindemenge eines chemisch-reaktiven Cold-Box-Binders. Das Speisergemisch wird zu einem ungehärteten Speiser geformt, welcher dann mit einem dampfförmigen Härtungskatalysator in Kontakt gebracht wird. Der gehärtete Speiser kann dann aus der Gussform entnommen werden. Als isolierendes feuerfestes Material können hohle Aluminiumsilikatmikrokugeln verwendet werden. Durch die Verwendung derartiger Mikrokugeln aus Aluminiumsilikat erhalten die Speiser eine niedrige thermische Leitfähigkeit und damit eine sehr ausgeprägt isolierende Wirkung. Ferner weisen diese Speiser ein sehr geringes Gewicht auf, so dass sie sich zum einen leicht handhaben und transportieren lassen und zum anderen nicht so leicht vom Modell abfallen, wenn dieses beispielsweise gekippt wird.

In der EP 0 913 215 B1 wird ein Verfahren zur Herstellung von Speisern und anderen Beschickungs- und Zuführungselementen für Gießformen beschrieben. Dazu wird eine Zusammensetzung, welche hohle Aluminiumsilikatmikrokügelchen mit einem Aluminiumoxidgehalt von weniger als 38 Gew.-%, ein Bindemittel zum Cold-Box-Härten und gegebenenfalls einen Füllstoff umfasst, wobei der Füllstoff nicht in faserförmiger Form vorliegt, durch Einblasen in einen Formkasten zu einem ungehärteten Formprodukt geformt. Dieses ungehärtete Formprodukt wird mit einem geeigneten Katalysator in Kontakt gebracht, wobei das Formprodukt aushärtet. Das ausgehärtete Formprodukt kann dann aus dem Formkasten entnommen werden. Auch die mit diesem Verfahren erhaltenen Speiser weisen eine ausgeprägte isolierende Wirkung sowie ein geringes Gewicht auf.

Die oben beschriebenen Speiser, welche als feuerfestes Füllmaterial Aluminiumsilikatmikrohohlkugeln enthalten, zeichnen sich zwar durch eine geringe Dichte und eine hohe Isolationswirkung aus. Nachteilig ist jedoch, dass sie eine relativ geringe Gasdurchlässigkeit aufweisen. Das flüssige Metall kann daher nur langsam in die Speiser hineinströmen.

Aus der WO 00/73236 A2 ist eine exotherme Speisermasse bekannt, welche Aluminium und Magnesium, mindestens ein Oxidationsmittel, einen $SiO_2$-haltigen Füllstoff und ein Alkalisilikat als Bindemittel enthält. Weiter enthält die Speisermasse etwa 2,5 bis 20 Gew.-% eines reaktiven Aluminiumoxids mit einer spezifischen Oberfläche von mindestens etwa 0,5 $m^2$/g und einem mittleren Teilchendurchmesser ($D_{50}$) von etwa 0,5 bis 8 $\mu$m. Die Speisermasse ist praktisch frei von fluoridhaltigen Flussmitteln. Durch die Verwendung einer derartigen Speisermasse zur Herstellung von Speisern konnte sogenannter "Hohlbrand", der wahrscheinlich durch eine Verglasung der $SiO_2$-haltigen Füllstoffe mit Alkaliverbindungen zustande kommt, deutlich zurückgedrängt werden.

Es ist bekannt, Formmassen für die Gießereiindustrie zur Gewichtseinsparung poröse feuerfeste Stoffe, wie zum Beispiel Bimsstein, in geringen Anteilen beizugeben. Diese porösen feuerfesten Stoffe sind jedoch relativ weich und zerfallen daher bei mechanischer Belastung sehr leicht. Der Anteil dieser porösen feuerfesten Stoffe liegt in bekannten Formmassen daher bei höchstens etwa 8 Gew.-%, bezogen auf das Trockengewicht der Formmasse. Werden höhere Anteile solcher porösen feuerfesten Stoffe verwendet, müssen starke Einbußen bei der Stabilität der Formkörper hingenommen werden, die aus solchen Formmassen hergestellt werden.

Der Erfindung lag als erste Aufgabe zugrunde, eine Formmasse für die Herstellung von Formkörpern für die Gießereiindustrie, insbesondere isolierender oder exothermer Speiser und anderer Fülltrichter und Zufuhrelemente für Gießformen, zur Verfügung zu stellen, welche die Herstellung von Formkörpern ermöglicht, die eine hohe Gasdurchlässigkeit aufweisen.

Diese Aufgabe wird mit einer Formmasse für die Herstellung von Formkörpern für die Gießereiindustrie, insbesondere isolierender oder exothermer Speiser und anderer Fülltrichter und Zufuhrelemente für Gießformen, mit den Merkmalen des Patentanspruchs 1 gelöst. Vorteilhafte Weiterbildungen der Formmasse sind Gegenstand der abhängigen Ansprüche.

Die erfindungsgemäße Formmasse für die Herstellung von Formkörpern für die Gießereiindustrie, insbesondere isolierender oder exothermer Speiser und anderer Fülltrichter und Zufuhrelemente für Gießformen, umfasst mindestens:

- mindestens 10 Gew.-% eines porösen feuerfesten Stoffes, welcher eine durchgehende offene Porenstruktur aufweist;

- ein Bindemittel zum Aushärten der Formmischung;

- ggf. einen feuerfesten Füllstoff;

- einen Anteil eines reaktiven Aluminiumoxids mit einer spezifischen Oberfläche von mindestens etwa 0,5 $m^2$/g und einem mittleren Teilchendurchmesser ($D_{50}$) von etwa 0,5 bis 8 $\mu$m.

Die erfindungsgemäße Formmasse enthält einen relativ hohen Anteil eines porösen feuerfesten Stoffes, welcher eine durchgehende offene Porenstruktur aufweist. Durch die offenporige Struktur werden die porösen feuerfesten Stoffe von einer Vielzahl von Passagen durchzogen, durch welche ein Gas strömen kann. Die aus der erfindungsgemäßen Formmasse hergestellten Formkörper weisen daher eine sehr hohe Gasdurchlässigkeit auf.

Überraschend wurde gefunden, dass sich durch eine Kombination eines porösen feuerfesten Stoffes, welcher eine durchgehende offene Porenstruktur und daher eine hohe Gasdurchlässigkeit aufweist, mit einem reaktivem Aluminiumoxid und ggf. einem feuerfesten Füllstoff eine Formmasse erhalten lässt, aus welcher Formkörper, insbesondere Speiser herstellt werden können, welche eine hohe Formgenauigkeit und ausreichende Festigkeit besitzen und die insbesondere eine sehr hohe Gasdurchlässigkeit aufweisen. Der Anteil des porösen feuerfesten Stoffes, welcher eine durchgehende offene Porenstruktur aufweist, lässt sich dabei gegenüber den bisher verwendeten Mengen wesentlich erhöhen. Der Anteil des porösen feuerfesten Materials an der Formmasse beträgt mindestens 10 Gew.-%, bezogen auf die trockene Formmasse, vorzugsweise mindestens 15 Gew.-%, insbesondere bevorzugt mindestens 20 Gew.-%.

Unter einem porösen feuerfesten Stoff, welcher eine durchgehend offene Porenstruktur aufweist, wird dabei ein feuerfester Stoff mit einer schwammartigen Struktur verstanden, welche sich durch das gesamte Volumen des Korns erstreckt. Eine solche offenporige Struktur lässt sich beispielsweise an einem Schliffbild eines Korns, ggf. unter mikroskopischer Vergrößerung, erkennen. Während bei den Eingangs erwähnten Mikrohohlkügelchen jeweils eine einzelne "Pore" von einer weitgehend gasdichten Hülle umgeben wird und daher kein einfacher Gasaustausch zwischen dem Hohlraum des Mikrohohlkügelchen und der Umgebung möglich ist, wird der in der erfindungemäßen Formmasse enthaltene offenporige feuerfeste Stoff von Passagen durchzogen, welche einen Gasaustausch der einzelnen Poren mit der Umgebung ermöglichen. Der Anteil der Poren am gesamten Volumen des porösen offenporigen Stoffes ist bevorzugt sehr hoch. Bevorzugt weist der poröse feuerfeste Stoff ein Porenvolumen von zumindest 50 %, vorzugsweise mindestens 60 %, insbesondere mindestens 65 % auf. Das Porenvolumen lässt sich beispielsweise durch Quecksilberintrusion bestimmen.

Die in der erfindungsgemäßen Formmasse enthaltenen porösen feuerfesten Stoffe mit offenporiger Struktur weisen vorzugsweise eine Dichte von weniger als 0,5 g/ml, vorzugsweise weniger als 0,4 g/ml, insbesondere bevorzugt 0,05 bis 0,4 g/ml auf. Die aus der erfindungsgemäßen Formmasse hergestellten Formkörper weisen daher vorteilhaft ein geringes Gewicht auf. Aus der Formmasse hergestellte Speiser können beispielsweise auf ein Modell aufgesteckt werden und fallen wegen ihres geringen Gewichtes nicht ab, wenn das Modell bzw. die Form gewendet wird.

Ferner weist der in der erfindungsgemäßen Formmasse verwendete poröse feuerfeste Stoff vorzugsweise eine geringe Wärmeleitfähigkeit auf. Vorzugsweise beträgt die Wärmeleitfähigkeit des porösen feuerfesten Stoffes 0,04 - 0,25 W/mK.

Geeignete poröse feuerfeste Stoffe sind beispielsweise Bimsstein, Blähschiefer, Perlit, Vermiculit, Kesselsand, Schaumlava oder Blähbeton, sowie deren Gemische.

Formkörper, welche aus der erfindungsgemäßen Formmasse hergestellt werden, zeigen eine sehr hohe Gasdurchlässigkeit. Werden aus der erfindungsgemäßen Formmasse Speiser hergestellt, kann wegen deren hoher Gasdurchlässigkeit beim Einfüllen von flüssigem Metall in die Gießform die im Gießhohlraum enthaltene Luft durch die Wand der Speiser entweichen, so dass das flüssige Metall ohne Schwierigkeiten in den Gießformhohlraum bzw. den Hohlraum der Speiser einströmen kann.

Die Formmasse weist vorzugsweise eine Gasdurchlässigkeitszahl von mindestens 150, vorzugsweise mehr als 200, insbesondere mehr als 300 auf. Die Gasdurchlässigkeitszahl ist eine in der Gießereiindustrie übliche Kenngröße für die Porosität von Formkörpern oder Formsanden. Sie wird üblicherweise an Geräten der Firma Georg Fischer AG, Schaffhausen, Schweiz, bestimmt.

Die Bestimmung der Gasdurchlässigkeit des porösen feuerfesten Materials wird weiter unten beschrieben.

Für die Verwendung in der erfindungsgemäßen Formmasse wird das poröse feuerfeste Material auf eine geeignete Korngröße vermahlen. Die geeignete Korngröße kann vom Fachmann durch Reihenversuche einfach ermittelt werden. Geeignet wird das poröse feuerfeste Material auf eine mittlere Korngröße von weniger als 1,5 mm, insbesondere bevorzugt weniger als 1 mm vermahlen. Die Korngröße kann durch übliche Verfahren, beispielsweise durch Sieben oder Windsichten, eingestellt werden.

Besonders bevorzugt wird Bimsstein als poröses feuerfestes Material verwendet. Bimsstein ist ein natürlich vorkommendes Gesteinsglas, d.h. er besitzt im Wesentlichen eine amorphe Struktur ohne erkennbare Kristalle. Bimsstein weist ein geringes spezifisches Gewicht von bis zu etwa 0,3 g/cm$^3$ auf. Er besitzt ein sehr hohes Porenvolumen von bis zu 85 %. Durch seine hohe Porosität weist der Bimsstein eine sehr hohe Gasdurchlässigkeit auf.

Als Bimsstein wird vorzugsweise ein Material aus einer natürlichen Quelle verwendet, welches auf eine geeignete Korngröße vermahlen ist. Die Korngröße des gemahlenen Bimssteins beträgt vorzugsweise weniger als 1,5 mm, insbesondere bevorzugt weniger als 1 mm. Die Korngröße kann beispielsweise durch Sieben oder Windsichten eingestellt werden.

Die erfindungsgemäße Formmasse enthält ggf. weiter einen feuerfesten Füllstoff. Als feuerfester Füllstoff können beispielsweise Aluminiumsilikate verwendet werden, beispielsweise faserförmige Feuerfeststoffe, oder auch Zirkonoxidsand. Ferner können auch synthetisch hergestellte feuerfeste Füllstoffe verwendet werden, wie beispielsweise Mullit ($Al_2SiO_5$). In der Auswahl der feuerfesten Füllstoffe bestehen zunächst an sich keine Beschränkungen.

Ferner umfasst die erfindungsgemäße Formmasse einen Anteil eines reaktiven Aluminiumoxids. Dieses weist eine spezifische Oberfläche von mindestens etwa 0,5 m$^2$/g und einen mittleren Teilchendurchmesser ($D_{50}$) von etwa 0,5 bis 8 $\mu$m auf. Das reaktive Aluminiumoxid lässt sich erhalten, indem Aluminiumoxid sehr fein vermahlen wird.

Vorzugsweise umfasst die Formmasse einen feuerfesten Füllstoff, welcher einen relativ geringen SiO$_2$-Anteil aufweist. Vorzugsweise weist der feuerfeste Füllstoff einen SiO$_2$-Anteil von weniger als 60 Gew.-%, bevorzugt weniger als 50%, insbesondere bevorzugt weniger als 40% auf. Durch den geringen Anteil an SiO$_2$ wird der Gefahr eines Verglasens entgegengewirkt, wodurch Gussfehler vermieden werden können. Besonders bevorzugt enthält die erfindungsgemäße Formmasse kein SiO$_2$ als Mischungsbestandteil, ist also frei von beispielsweise Quarzsand. Der in der Formmasse enthaltene SiO$_2$-Anteil liegt also vorzugsweise in gebundener Form als Aluminiumsilikat vor.

Besonders bevorzugt ist der feuerfeste Füllstoff zumindest anteilig aus Schamotte gebildet. Unter Schamotte wird ein hoch gebrannter (doppelt gebrannter) Ton verstanden, welcher eine Formbeständigkeit bis zu einer Temperatur von etwa 1500°C aufweist. Neben amorphen Anteilen kann Schamotte die kristallinen Phasen Mullit ($3Al_2O_3 \cdot 2SiO_2$) und Cristobalit ($SiO_2$) enthalten. Die Schamotte ist ebenfalls bevorzugt auf eine Korngröße von weniger als 1,5 mm, vorzugsweise weniger als 1 mm gemahlen. Durch die Schamotte erhalten die aus der Formmasse hergestellten Formkörper, insbesondere Speiser, eine sehr hohe Temperaturbeständigkeit und Festigkeit.

Bevorzugt ist der Anteil der Schamotte am feuerfesten Füllstoff hoch gewählt. Bevorzugt beträgt der Anteil der Schamotte, bezogen auf das Gewicht des feuerfesten Füllstoffs, zumindest 50 Gew.-%, insbesondere bevorzugt zumindest 60 Gew.-%, und ganz besonders bevorzugt mindestens 70 Gew.-%. In einer besonders bevorzugten Ausführungsform wird der feuerfeste Füllstoff im Wesentlichen nur aus Schamotte gebildet. Die Schamotte ist in der erfindungsgemäßen Formmasse bevorzugt in gemahlener Form enthalten. Die Korngröße beträgt hierbei bevorzugt weniger als 1,5 mm, insbesondere bevorzugt weniger als 1 mm.

Die Schamotte weist bevorzugt einen hohen Anteil an Aluminiumoxid auf. Bevorzugt enthält die Schamotte mindestens 30 Gew.-% Aluminiumoxid, insbesondere bevorzugt zumindest 35 Gew.-% und ganz besonders bevorzugt zumindest 40 Gew.-%. Das Aluminiumoxid liegt bevorzugt in Form von Aluminiumsilikaten vor.

Der Anteil des feuerfesten Füllstoffs, bezogen auf das Gewicht der Formmasse beträgt bevorzugt zwischen 5 und 60 Gew.-%, insbesondere bevorzugt 8 bis 50%. Die Anteile des feuerfesten Füllstoffs schließen die Anteile an Bimsstein und reaktiven Aluminiumoxid nicht ein.

Die Prozentangaben, welche die Anteile der einzelnen Komponenten an der Formmasse angeben, beziehen sich jeweils auf das Gewicht der Formmasse in trockenem Zustand.

Als Bindemittel zum Aushärten der Speisermischung können an sich beliebige Bindemittel verwendet werden. Bevorzugt ist das Bindemittel ausgewählt aus Cold-Box-Bindemitteln und Wasserglas. Als Bindemittel sind jedoch auch Hot-Box- oder Harzbinder geeignet.

Bei Verwendung eines Cold-Box-Bindemittels ist dieses bevorzugt ausgewählt aus der Gruppe von Phenol-Urethan-Harzen, welche durch Amine aktiviert werden, Epoxy-Acryl-Harzen, welche durch $SO_2$ aktiviert werden können, alkalischen Phenolharzen, welche durch $CO_2$ oder Methylformiat aktiviert werden können, sowie Wasserglas, welches durch $CO_2$ aktiviert werden kann. Dem Fachmann sind an sich derartige Cold-Box-Bindemittel bekannt. Solche Bindemittelsysteme sind beispielsweise in der US 3,409,579 oder der US 4,526,219 beschrieben.

Besonders bevorzugt wird Wasserglas als Bindemittel eingesetzt. Als Wasserglas können dabei übliche Wassergläser verwendet werden, wie sie bereits als Bindemittel in Formstoffmischungen für die Gießereiindustrie verwendet werden. Diese Wassergläser enthalten gelöste Natrium- oder Kaliumsilikate und können durch Lösen von glasartigen Kalium- und Natriumsilikaten in Wasser hergestellt werden. Das Wasserglas weist vorzugsweise ein Modul $M_2O/SiO_2$ im Bereich von 2,0 bis 3,5 auf, wobei M für Natrium und/oder Kalium steht. Die Wassergläser weisen vorzugsweise einen Feststoffanteil im Bereich von 20 bis 50 Gew.-% auf. Besonders bevorzugt ist festes Wasserglas in der erfindungsgemäßen Formmasse enthalten. Für die Anteile an der Formmasse werden jeweils nur die Feststoffanteile des Wasserglases berücksichtigt.

Als weiteren wesentlichen Bestandteil neben dem porösen feuerfesten Stoff, insbesondere Bimsstein, enthält die erfindungsgemäße Formmasse einen Anteil eines reaktiven Aluminiumoxids. Das reaktive Aluminiumoxid weist bevorzugt einzelne, insbesondere bevorzugt alle der folgenden Eigenschaften auf:

| | |
|---|---|
| $Al_2O_3$-Gehalt | > 90 % |
| Gehalt an OH-Gruppen | < 5 % |
| spezifische Oberfläche (BET) | 1 bis 10 $m^2/g$ |
| mittlerer Teilchendurchmesser ($D_{50}$) | 0,5 bis 15 $\mu m$ |

Der in der erfindungsgemäßen Formmasse enthaltene poröse feuerfeste Stoff, insbesondere Bimsstein, weist vorzugsweise ein Porenvolumen von zumindest 50 %, vorzugsweise zumindest 70 % auf. Der Anteil des Porenvolumens bezieht sich dabei auf das Gesamtvolumen des porösen feuerfesten Stoffs bzw. Bimssteins.

Der Anteil des porösen feuerfesten Stoffs, insbesondere Bimssteins, wird in der erfindungsgemäßen Formmasse relativ hoch gewählt. Bezogen auf das Gewicht der Formmasse beträgt der Anteil des porösen feuerfesten Stoffs, insbesondere Bimssteins, vorzugsweise zumindest 16 Gew.-%, bevorzugt zumindest 18 Gew.-%, insbesondere bevorzugt zumindest 20 Gew.-%. Für Formmassen für die Herstellung exothermer Speiser beträgt der Anteil des porösen feuerfesten Materials, insbesondere Bimsstein, an der erfindungsgemäßen Formmasse bevorzugt zwischen 15 und 35 Gew.-% und insbesondere bevorzugt zwischen 18 und 25 Gew.-%. Für die Herstellung isolierender Formkörper, beispielsweise isolierender Speiser, kann der Anteil des Bimssteins auch höher gewählt werden, beispielsweise größer als 50 Gew.-%.

Die erfindungsgemäße Formmasse ermöglicht durch die hohe Porosität des Bimssteins die Herstellung isolierender Formkörper, insbesondere isolierender Speiser. Es ist aber auch möglich, die Formmasse in der Weise auszuführen, dass diese für die Herstellung exothermer Speiser verwendet werden kann, welche sich beim Kontakt mit flüssigem Metall entzünden und dadurch für eine Verzögerung der Erstarrung des Metalls im Speiser sorgen. Zu diesem Zweck enthält die erfindungsgemäße Formmasse in einer Ausführungsform ein oxidierbares Metall, insbesondere Aluminium und/oder Magnesium und/oder Silicium, sowie ein Oxidationsmittel. Die oxidierbaren Metalle und das Oxidationsmittel liegen vorzugsweise ebenfalls in feinteiliger Form vor. Als Oxidationsmittel kann wie bei den bekannten Formmassen beispielsweise Eisenoxid und/oder ein Alkalinitrat, wie Natrium- oder Kaliumnitrat verwendet werden, wobei das Reaktionsprodukt des letzteren (Alkalinitrit bzw. Alkalioxid) mit dem reaktiven Aluminiumoxid reagiert.

Neben den bereits genannten Bestandteilen kann die Formmasse noch andere Bestandteile in üblichen Mengen enthalten. So kann beispielsweise ein organisches Material enthalten sein, wie z.B. Holzmehl. Vorteilhaft liegt das organische Material in einer Form vor, in der dieses keine flüssigen Bestandteile, wie z.B. Wasserglas, aufsaugt. Das Holzmehl kann dazu beispielsweise zunächst mit einem geeigneten Material, wie Wasserglas, versiegelt werden, sodass die Poren verschlossen sind. Durch die Anwesenheit des organischen Materials wird die Abkühlung des flüssigen Metalls beim Erstkontakt mit der Wand des aus der erfindungsgemäßen Formmasse hergestellten Formkörpers, insbesondere Speisers, herabgesetzt.

Die erfindungsgemäße Formmasse ist vorzugsweise nahezu frei von fluoridhaltigen Flussmitteln. Der Fluoridgehalt beträgt vorzugsweise weniger als 1 Gew.-%, bevorzugt weniger als 0,5 Gew.-%, insbesondere bevorzugt weniger als 0,1 Gew.-%, berechnet als Natriumfluorid.

Das reaktive Aluminiumoxid ist vorzugsweise, bezogen auf das Gewicht der Formmasse, in einem Anteil von mehr als 2 Gew.-%, vorzugsweise mehr als 5 Gew.-% in der erfindungsgemäßen Formmasse enthalten.

Die Zusammensetzung der erfindungsgemäßen Formmasse kann den Anforderungen entsprechend variiert werden. Für die Herstellung von isolierenden Speisern werden die Mengen an porösem feuerfestem Stoff, insbesondere Bimsstein, feuerfestem Füllstoff und reaktivem Aluminiumoxid bevorzugt innerhalb der folgenden Bereiche gewählt:

| feuerfester poröser Stoff (Bimsstein) | 15 bis 90 Gew.-%, vorzugsweise 60 bis 80 Gew.-% |
|---|---|
| feuerfester Füllstoff | 5 bis 50 Gew.-%, bevorzugt 8 bis 20 Gew.-% |
| reaktives Aluminiumoxid | 5 bis 30 Gew.-%, bevorzugt 8 bis 20 Gew.-% |

Sofern ein organisches Material, wie Holzmehl, enthalten ist, ist dieses vorzugsweise in einem Anteil von 5 bis 20 Gew.-%, vorzugsweise 8 bis 12 Gew.-% enthalten.

Für eine exotherme Formmasse betragen die Anteile bevorzugt:

| Aluminium | 20 bis 35 Gew.-%, vorzugsweise 25 bis 30 Gew.-% |
|---|---|
| Magnesium | 1 bis 15 Gew.-%, vorzugsweise 2 bis 10 Gew.-% |
| Oxidationsmittel | 8 bis 20 Gew.-%, vorzugsweise 10 bis 15 Gew.-% |
| reaktives Aluminiumoxid | 4 bis 20 Gew.-%, vorzugsweise 10 bis 18 Gew.-% |
| feuerfester poröser Stoff (Bimsstein) | 15 bis 40 Gew.-%, vorzugsweise 20 bis 30 Gew.-% |
| feuerfester Füllstoff | 5 bis 30 Gew.-%, vorzugsweise 8 bis 20 Gew.-% |

Ein weiterer Gegenstand der Erfindung betrifft ein Verfahren zum Herstellen von Formkörpern für die Gießereiindustrie, insbesondere isolierender oder exothermer Speiser und anderer Fülltrichter und Zufuhrelemente für Gießformen, mit den Schritten:

- Einbringen einer Formmasse, wie sie oben beschrieben wurde, in eine Form unter Erhalt eines ungehärteten Formkörpers;
- Aushärten des ungehärteten Formkörpers unter Erhalt eines ausgehärteten Formkörpers; und
- Entnahme des ausgehärteten Formkörpers aus der Form.

Die erfindungsgemäße Formmasse lässt sich in der üblichen Weise zu Formkörpern für die Gießereiindustrie verarbeiten, wobei beispielsweise Speiser, Fülltrichter- oder Zufuhrelemente für Gießformen erhalten werden, welche sich durch eine sehr hohe Gasdurchlässigkeit und eine sehr hohe Festigkeit auszeichnen. Um die Verluste an Bindemittel gering halten zu können, kann der poröse feuerfeste Stoff auch zunächst mit einer Füllflüssigkeit belegt werden, die den Abbindevorgang nicht nachteilig beeinflusst, beispielsweise Wasser.

Zum Aushärten des ungehärteten Formkörpers können übliche Verfahren verwendet werden. Wird ein Cold-Box-Bindemittel verwendet, erfolgt das Aushärten des Bindemittels durch Begasen mit einem geeigneten Katalysator bzw. Härtungsmittel. Geeignete Verbindungen wurden bereits weiter oben beschrieben. Wird beispielsweise ein Hot-box-Bindemittel verwendet, wird die Aushärtung des Formkörpers durch Erwärmen auf eine geeignete Temperatur bewirkt. Hot-box-Bindemittel entsprechen in ihrer Struktur im Wesentlichen Cold-Box-Bindemitteln. Im Unterschied zu diesen erfolgt die Aushärtung jedoch nicht unter Zugabe eines Katalysators bei vergleichsweise niedrigen Temperaturen. Die zur Aushärtung erforderliche Energie wird vielmehr durch Erhitzen des ungehärteten Formkörpers zugeführt.

Bevorzugt wird als Bindemittel Wasserglas verwendet, wobei das Aushärten durch Erwärmen erfolgt, bei welchem das im Wasserglas enthaltene Wasser verdampft wird. Dazu kann beispielsweise Heißluft durch den Formkörper geblasen werden. Es ist aber auch möglich, das Wasserglas durch Einblasen von Kohlendioxid auszuhärten.

Ein weiterer Gegenstand der Erfindung betrifft einen Formkörper für die Gießereiindustrie, insbesondere Speiser, Fülltrichter und Zufuhrelemente für Gießformen, welcher mit dem oben beschriebenen Verfahren erhalten wurde. Diese Formkörper zeichnen sich durch die folgenden Vorteile aus:

Die Gasdurchlässigkeit der Formkörper ist sehr hoch. Dadurch können typische Gasfehler vermieden werden.

Die Temperaturstabilität der Formkörper ist sehr hoch, da ein Quarzsprung vermieden werden kann.

Die erfindungsgemäßen Formkörper zeigen nur eine geringe Penetration durch das in die Gießform eingefüllte flüssige Metall.

Die Formkörper, insbesondere exotherme Speiser, können einen hohen Anteil an Magnesium enthalten. Dadurch wird die Entartungsneigung des Gusseisens verkleinert, da die Bildung von Lamellengraphit verhindert und die erwünschte Bildung von Kugelgraphit gefördert wird.

Die Formkörper weisen ein geringes spezifisches Gewicht auf und sind daher besser handhabbar. Insbesondere Speiser können in jeglicher Form hergestellt werden, beispielsweise auch Speiser, welche in das Modell eingesteckt werden. Diese müssen besonders leicht sein, da sonst beim Wenden der Form die Gefahr des Herausfallens besteht.

Die Formkörper weisen einen sehr hohe Festigkeit auf, welche die Festigkeit von Formkörpern übertrifft, die unter Verwendung von Aluminiumsilikatmikrohohlkugeln hergestellt werden.

Die erfindungsgemäßen Formkörper weisen eine hohe Isolationswirkung auf, so dass auch nicht-exotherme Formkörper, insbesondere Isolierspeiser hergestellt werden können. Die Formkörper bieten hohe Festigkeiten und gute Maßhaltigkeit im Vergleich zu handelsüblichen Faserspeisern.

Die erfindungsgemäßen Formkörper, insbesondere Speiser, können auch noch organische Materialien enthalten, wodurch zusätzlich die Erstkontaktkühlung verringert wird, wodurch die Isolierwirkung weiter erhöht wird.

Die erfindungsgemäßen Formkörper, insbesondere Speiser, Fülltrichter oder Zuführelemente, zeichnen sich insbesondere durch eine sehr hohe Gasdurchlässigkeit aus. Bevorzugt weisen die erfindungsgemäßen Formkörper, insbesondere Speiser, Fülltrichter- bzw. Zuführelemente eine Gasdurchlässigkeitszahl von mehr als 150, vorzugsweise mehr als 200 auf. Die Bestimmung der Gasdurchlässigkeitszahl wird weiter unten erläutert.

Ein weiterer Gegenstand der Erfindung betrifft die Verwendung eines Formkörpers, insbesondere Speisers, Fülltrichters oder Zufuhrelements, wie er oben beschrieben wurde, in einem Verfahren zum Gießen eines Metallgussteils, mit den Schritten:

- Bereitstellen eines Modells in einen Formkasten;

- Anbringen von zumindest einem Formkörper, insbesondere Speiser, Fülltrichter- oder Zuführelement für Gießformen, wie er oben beschrieben wurde, an dem Modell;

- Einfüllen und Verdichten und Aushärten eines Formstoffs in dem Formkasten, so dass eine Gießform erhalten wird;

- Entnahme der Gießform aus dem Formkasten;

- Einfüllen von flüssigem Metall in die Gießform;

- Abkühlen des Metalls zum Erstarren und Erhalt eines Metallgussteils; und

- Entnahme des Metallgussteils aus der Gießform.

Die erfindungsgemäßen Formkörper lassen sich in üblichen Verfahren zur Herstellung von Gießformen verwenden. Die Herstellung der Gießform erfolgt dabei nach üblichen Verfahren, wobei dem Fachmann bekannte Materialien, wie beispielsweise Formsand, als Formstoff eingesetzt werden.

Die Erfindung wird im weiteren anhand von Beispielen näher erläutert.

Analysenmethoden:

Bestimmung der Gasdurchlässigkeitszahl

a) Herstellung eines Prüfkörpers:

Etwa 100 g des zu prüfenden porösen feuerfesten Materials, das auf ein Mittelkorn von etwa 0,3 mm eingestellt wurde, werden in einem Mischer während etwa 2 Minuten mit 20 g Wasserglas (Feststoffgehalt etwa 30 %, Modul

$Na_2O/SiO_2$ etwa 2,5) vermischt. Das Gemisch wird in eine Hülse eingefüllt, welche einen Innendurchmesser von 50 mm aufweist. Die Hülse ist in einer Georg-Fischer Ramme (Georg Fischer AG, Schaffhausen) eingesetzt. Die Mischung wird in der Ramme durch drei Schläge verdichtet. Die Hülse mit der verdichteten Formmasse wird aus der Ramme entnommen und die Formmasse ausgehärtet, indem von den offenen Enden der Hülse her für jeweils etwa 3 Sekunden Kohlendioxid durch die Formmasse geblasen wird. Der ausgehärtete Prüfkörper kann dann aus der Hülse herausgedrückt werden. Nachdem der Prüfkörper herausgedrückt wurde, wird seine Höhe gemessen. Diese sollte 50 mm betragen. Sofern der Prüfkörper nicht die gewünschte Höhe aufweist, muss mit einer angepassten Menge der Formmasse ein weiterer Prüfkörper hergestellt werden. Der Prüfkörper wird anschließend in einem Ofen bei 180°C bis zur Gewichtskonstanz getrocknet.

b) Prüfung der Gasdurchlässigkeit

Die Prüfung der Gasdurchlässigkeit erfolgt mit einer Durchlässigkeitsprüfapparatur Typ PDU der Firma Georg Fischer Aktiengesellschaft, 8201 Schaffhausen, Schweiz.

Der wie unter (a) beschrieben hergestellte Prüfkörper wird in das Präzisions-Prüfkörperrohr der Apparatur eingesetzt und der Spalt zwischen Prüfkörper und Prüfkörperrohr abgedichtet. Das Prüfkörperrohr wird in die Prüfapparatur eingesetzt und die Gasdurchlässigkeitszahl Gd bestimmt. Die Gasdurchlässigkeitszahl Gd gibt an, wieviel $cm^3$ Luft bei einem Überdruck von 1 cm Wassersäule in einer Minute durch einen Würfel oder Zylinder mit 1 $cm^2$ Querschnitt hindurchgehen. Die Gasdurchlässigkeitszahl wird wie folgt berechnet:

$$Gd = (Q \cdot h)/(F \cdot p \cdot t)$$

wobei bedeutet:

Gd: Gasdurchlässigkeitszahl
Q: durchströmendes Luftvolumen (2000 $cm^3$);
h: Höhe des Prüfkörpers
F: Querschnittsfläche des Prüfkörpers (19,63 $cm^3$);
p: Druck in cm Wassersäule;
t: Durchströmzeit für 2000 $cm^3$ Luft in Minuten.

p und t werden bestimmt; alle übrigen Werte sind durch das Prüfgerät festgelegte Konstanten.

Bestimmung der spezifischen Oberfläche:

Die BET-Oberfläche wird an einem voll automatischen Stickstoffporosimeter der Firma Mikromeritics, Typ ASAP 2010, gemäß DIN 66131 bestimmt.

Porenvolumen:

Die Porosität des Bimssteins wird durch Quecksilberporosimetrie nach DIN 66133 ermittelt.

Mittlerer Teilchendurchmesser ($d_{50}$):

Der mittlere Teilchendurchmesser wurde durch Laserbeugung auf einem Mastersizer S, Firma Malvern Instruments GmbH, Herrenberg, DE nach Herstellerangaben ermittelt.

Elementaranalyse:

Die Analyse beruht auf einem Totalaufschluss der Materialien. Nach dem Auflösen der Feststoffe werden die Einzelkomponenten mit herkömmlich spezifischen Analysenmethoden, wie z.B. ICP analysiert und quantifiziert.

Bestimmung der Dichte:

Das pulverförmige poröse feuerfeste Material wird in einem Zug in einen zuvor gewogenen 1000 ml Glaszylinder eingefüllt, der an der 1000 ml Markierung abgeschnitten wurde. Nachdem der Schüttkegel abgestreift und außen am Zylinder anhängendes Material entfernt wurde, wird der Zylinder erneut gewogen. Die Gewichtszunahme entspricht der Dichte.

Beispiel 1:

Rezeptur für eine exotherme Trockenmischung, anorganisch gebunden

| reaktives Aluminiumoxid | 8 - 12 | % |
|---|---|---|
| Bims | 20 - 30 | % |
| Schamotte | 8 - 12 | % |
| Aluminiumpulver | 25 - 29 | % |
| Magnesium | 2 - 12 | % |
| Salpeter | 15 - 21 | % |
| Wasserglas Pulver | 1 - 5 | % |
| Wasserglas (flüssig) | 15 - 25 % | |

Der gemahlene Bimsstein wird in einem Mischer vorgelegt und die anderen Bestandteile der Mischung unter Rühren zugegeben. Die Mischung kann in üblichen Vorrichtungen zu Speisern geformt werden. Die Aushärtung erfolgt durch Einblasen von heißer Luft in den ungehärteten Formkörper.

Beispiel 2

Isolierende Trockenmischung

| Bims | 80 - 90 | % |
|---|---|---|
| reaktives Aluminiumoxid | 2 - 8 | % |
| Holzmehl | 5 - 15 | % |
| Wasserglas (Pulver) | 8 - 15 | % |
| Wasser | 15 - 25 | % |

Der gemahlene Bimsstein wird vorgelegt und das Wasser zugegeben. Nachdem der Bimsstein etwa 2 Minuten gemischt wurde, werden die anderen Bestandteile sowie das feste Wasserglas zugegeben und die Mischung bis zum Erreichen einer homogenen Masse weiter gerührt.

Beispiel 3

Exotherme Trockenmischung, organisch gebunden

| reaktives Aluminiumoxid | 10 - 20 | % |
|---|---|---|
| Bims | 25 - 35 | % |
| Schamotte | 5 - 15 | % |
| Aluminiumpulver | 22 - 28 | % |
| Magnesium | 2 - 8 | % |

(fortgesetzt)

| Salpeter | 12 - 18 | % |
|---|---|---|
| Ecocure® 30 | 10 | % |
| Ecocure® 60 | 12 | % |

In einem Mischer wird der gemahlene Bimsstein vorgelegt und die weiteren Bestandteile der Formmasse sowie die Cold-Box-Binder I und II unter Rühren zugegeben. Als Cold-Box-Binder können übliche Bindemittel verwendet werden. Im Beispiel werden Ecocure® 30, ein Benzyletherharz, sowie Ecocure® 60, ein Diisocyanat, verwendet. Diese Cold-Box-Bindemittel werden von der Ashland-Südchemie-Kernfest GmbH, Hilden, Deutschland angeboten. Die Cold-Box-Bindemittel werden mit einem Amin als Katalysator ausgehärtet.

Isolierende Trockenmischung, organisch gebunden

| Bims | 70 - 80 | % |
|---|---|---|
| reaktives Aluminiumoxid | 10 - 20 | % |
| Schamotte | 8 - 12 | % |
| Holzmehl | 8 - 12 | % |
| Ecocure® 30 | 8 | % |
| Ecocure® 60 | 10 | % |

Der Bims, die reaktive Tonerde, die Schamotte, das Holzmehl werden in einem Mischer vorgelegt. Anschließend werden die Cold-Box-Binder I und II zugegeben und die Mischung für weitere 2 Minuten geknetet.

**Patentansprüche**

1. Formmasse für die Herstellung von Formkörpern für die Gießereiindustrie, insbesondere isolierender oder exothermer Speiser und anderer Fülltrichter und Zufuhrelemente für Gießformen, mindestens umfassend:

   - mindestens 10 Gew.-% eines porösen feuerfesten Stoffes, welcher eine durchgehende offene Porenstruktur aufweist;
   - ein Bindemittel zum Aushärten der Formmasse;
   - ggf. einen feuerfesten Füllstoff;
   - einen Anteil eines reaktiven Aluminiumoxids mit einer spezifischen Oberfläche von mindestens 0,5 m$^2$/g und einem mittleren Teilchendurchmesser (D$_{50}$) von 0,5 bis 8 $\mu$m.

2. Formmasse nach Anspruch 1, **dadurch gekennzeichnet, dass** der poröse feuerfeste Stoff eine Dichte von weniger als 0,5 kg/l aufweist.

3. Formmasse nach Anspruch 1 oder 2, **dadurch gekennzeichnet, dass** der poröse feuerfeste Stoff ausgewählt ist aus Bimsstein, Blähschiefer, Perlit, Vermiculit, Kesselsand, oder Schaumlava sowie deren Gemische.

4. Formmasse nach einem der vorhergehenden Ansprüche, **dadurch gekennzeichnet, dass** die Formmasse eine Gasdurchlässigkeitszahl (Gd) von mehr als 150 aufweist, gemessen an einem ausgehärteten Prüfkörper.

5. Formmasse nach einem der vorhergehenden Ansprüche, **dadurch gekennzeichnet, dass** der feuerfeste Füllstoff einen SiO$_2$-Anteil von weniger als 60 Gew.-% aufweist.

6. Formmasse nach einem der vorhergehenden Ansprüche, **dadurch gekennzeichnet, dass** der feuerfeste Füllstoff zumindest anteilig aus Schamotte gebildet ist.

**7.** Formmasse nach Anspruch 6, **dadurch gekennzeichnet, dass** der Anteil der Schamotte, bezogen auf das Gewicht des feuerfesten Füllstoffs, zumindest 50 Gew.-% beträgt.

**8.** Formmasse nach einem der Ansprüche 6 oder 7, **dadurch gekennzeichnet, dass** die Schamotte zumindest 30 Gew.-% Aluminiumoxid enthält.

**9.** Formmasse nach einem der vorhergehenden Ansprüche, **dadurch gekennzeichnet, dass** der Anteil des feuerfesten Füllstoffs, bezogen auf das Gewicht der Formmasse zwischen 5 und 60 Gew.-% beträgt.

**10.** Formmasse nach einem der vorhergehenden Ansprüche, **dadurch gekennzeichnet, dass** das Bindemittel ausgewählt ist aus Cold-Box-Bindemitteln, Hot-box-Bindemitteln und Wasserglas.

**11.** Formmasse nach Anspruch 10, **dadurch gekennzeichnet, dass** das Cold-Box-Bindemittel ausgewählt ist aus der Gruppe von Phenol-Urethan-Harzen, welche durch Amine aktiviert werden, Epoxy-Acryl-Harzen, welche durch $SO_2$ aktiviert werden, alkalischen Phenolharzen, welche durch $CO_2$ oder durch Methylformiat aktiviert werden, und Wasserglas, welches durch $CO_2$ aktiviert wird.

**12.** Formmasse nach einem der vorhergehenden Ansprüche, **dadurch gekennzeichnet, dass** das reaktive Aluminiumoxid, bezogen auf das Gewicht der Formmasse, in einem Anteil von mehr als 2 Gew.-%, vorzugsweise mehr als 5 Gew.-% enthalten ist.

**13.** Formmasse nach einem der vorhergehenden Ansprüche, **dadurch gekennzeichnet, dass** das reaktive Aluminiumoxid folgende Eigenschaften aufweist:

| | |
|---|---|
| $Al_2O_3$-Gehalt : | > 90%; |
| Gehalt an OH-Gruppen: | < 5%; |
| spezifische Oberfläche (BET): | 1 bis 10m$^2$/g; |
| mittlerer Teilchendurchmesser ($d_{50}$): | 0,5 bis 15$\mu$m. |

**14.** Formmasse nach einem der vorhergehenden Ansprüche, **dadurch gekennzeichnet, dass** der poröse feuerfeste Stoff ein Porenvolumen von zumindest 50 % aufweist.

**15.** Formmasse nach einem der vorhergehenden Ansprüche, **dadurch gekennzeichnet, dass** der Anteil des porösen feuerfesten Stoffs, bezogen auf das Gewicht der Formmasse zumindest 15 Gew.-%, vorzugsweise zwischen 28 und 40 Gew.-%, insbesondere zwischen 20 und 25 Gew.-% beträgt.

**16.** Formmasse nach einem der vorhergehenden, **dadurch gekennzeichnet, dass** die Formmasse Aluminiumpulver und/oder Magnesiumpulver sowie ein Oxidationsmittel enthält.

**17.** Verfahren zum Herstellen eines Formkörpers für die Gießereiindustrie, insbesondere eines Speisers und anderer Fülltrichter- oder Zufuhrelemente für Gießformen, mit den Schritten:

- Einbringen einer Formmasse nach einem der Ansprüche 1 bis 16 in eine Form unter Erhalt eines ungehärteten Formkörpers;
- Aushärten des ungehärteten Formkörpers unter Erhalt eines ausgehärteten Formkörpers; und
- Entnahme des ausgehärteten Formkörpers aus der Form.

**18.** Verfahren nach Anspruch 17, **dadurch gekennzeichnet, dass** der ungehärtete Formkörper ausgehärtet wird, indem der ungehärtete Formkörper erhitzt wird.

**19.** Formkörper für die Gießereiindustrie, insbesondere Speiser, Fülltrichter oder Zuführelement für Gießformen, erhalten mit einem Verfahren gemäß einem der Ansprüche 17 oder 18.

**20.** Formkörper nach Anspruch 19, **dadurch gekennzeichnet, dass** der Formkörper, insbesondere Speiser, Fülltrichter- oder Zufuhrelement für Gießformen, eine Gasdurchlässigkeitszahl (Gd) von mehr als 150 aufweist.

21. Verwendung eines Formkörpers, insbesondere Speisers, Fülltrichters oder Zufuhrelements, nach einem der Ansprüche 19 oder 20 in einem Verfahren zum Gießen eines Metallgussteils, mit den Schritten:

- Bereitstellen eines Modells in einen Formkasten;
- Anbringen von zumindest einem Formkörper, insbesondere Speiser, Fülltrichter- oder Zufuhrelement für Gießformen, nach einem der Ansprüche 17 oder 18 an dem Modell;
- Einfüllen und Verdichten und Aushärten eines Formstoffs in dem Formkasten, so dass eine Gießform erhalten wird;
- Entnahme der Gießform aus dem Formkasten;
- Einfüllen von flüssigem Metall in die Gießform;
- Abkühlen des Metalls zum Erstarren und Erhalt eines Metallgussteils; und
- Entnahme des Metallgussteils aus der Gießform.

**Claims**

1. A molding composition for producing shaped bodies for the foundry industry, in particular insulating or exothermic feeders and other filling funnels and feeding elements for casting molds, which comprises at least:

   - at least 10% by weight of a porous refractory material which has a continuous open pore structure;
   - a binder for curing the molding mixture;
   - if appropriate, a refractory filler;
   - a proportion of a reactive aluminum oxide having a specific surface area of at least 0.5 $m^2/g$ and an average particle diameter ($D_{50}$) of from 0.5 to 8 $\mu$m.

2. The molding composition as claimed in claim 1, **characterized in that** the porous refractory material has a density of less than 0.5 kg/l.

3. The molding composition as claimed in claim 1 or 2, **characterized in that** the porous refractory material is selected from among pumice, expanded shale, pearlite, vermiculite, boiler sand, foamed lava and mixtures thereof.

4. The molding composition as claimed in any of the preceding claims, **characterized in that** the molding composition has a gas permeability index (Gp) of more than 150, measured on a cured test specimen.

5. The molding composition as claimed in any of the preceding claims, **characterized in that** the refractory filler has an $SiO_2$ content of less than 60% by weight.

6. The molding composition as claimed in any of the preceding claims, **characterized in that** the refractory filler is formed at least partly by chamotte.

7. The molding composition as claimed in claim 6, **characterized in that** the proportion of chamotte, based on the weight of the refractory filler, is at least 50% by weight.

8. The molding composition as claimed in either claim 6 or 7, **characterized in that** the chamotte contains at least 30% by weight of aluminum oxide.

9. The molding composition as claimed in any of the preceding claims, **characterized in that** the proportion of refractory filler, based on the weight of the molding composition, is in the range from 5 to 60% by weight.

10. The molding composition as claimed in any of the preceding claims, **characterized in that** the binder is selected from among cold box binders, hot box binders and water glass.

11. The molding composition as claimed in claim 10, **characterized in that** the cold box binder is selected from the group consisting of phenol-urethane resins which are activated by amines, epoxy-acrylic resins which are activated by $SO_2$, alkaline phenolic resins which are activated by $CO_2$ or by methyl formate and water glass which is activated by $CO_2$.

12. The molding composition as claimed in any of the preceding claims, **characterized in that** the reactive aluminum oxide is present in a proportion of more than 2% by weight, preferably more than 5% by weight, based on the weight of the molding composition.

13. The molding composition as claimed in any of the preceding claims, **characterized in that** the reactive aluminum oxide has the following properties:

| | |
|---|---|
| $Al_2O_3$ content: | > 90%; |
| OH group content: | < 5%; |
| Specific surface area (BET): | 1 to 10 $m^2$/g; |
| Average particle diameter ($d_{50}$): | 0.5 to 15 $\mu$m. |

14. The molding composition as claimed in any of the preceding claims, **characterized in that** the porous refractory material has a pore volume of at least 50%.

15. The molding composition as claimed in any of the preceding claims, **characterized in that** the proportion of the porous refractory material, based on the weight of the molding composition, is at least 15% by weight, preferably in the range from 28 to 40% by weight, in particular in the range from 20 to 25% by weight.

16. The molding composition as claimed in any of the preceding claims, **characterized in that** the molding composition contains aluminum powder and/or magnesium powder and an oxidant.

17. A process for producing shaped bodies for the foundry industry, in particular feeders and other filling funnels and feeding elements for casting molds, which comprises the steps:

- introduction of a molding composition as claimed in any of claims 1 to 16 into a mold to give an uncured shaped body;
- curing of the uncured shaped body to give a cured shaped body; and
- removal of the cured shaped body from the mold.

18. The process as claimed in claim 17, **characterized in that** the uncured shaped body is cured by heating the uncured shaped body.

19. A shaped body for the foundry industry, in particular a feeder, filling funnel or feeding element for casting molds, obtained by a process as claimed in either claim 17 or 18.

20. A shaped body as claimed in claim 19, **characterized in that** the shaped body, in particular feeder, filling funnel or feeding element for casting molds, has a gas permeability index (Gp) of more than 150.

21. The use of a shaped body, in particular a feeder, filling funnel or feeding element, as claimed in either claim 19 or 20 in a process for casting a metal casting, which comprises the steps:

- provision of a pattern in a mold box;
- attachment of at least one shaped body, in particular a feeder, filling funnel or feeding element for casting molds, as claimed in either claim 17 or 18 to the pattern;
- introduction and compaction and curing of a molding material in the mold box so as to give a casting mold;
- removal of the casting mold from the mold box;
- introduction of liquid metal into the casting mold;
- cooling of the metal to solidify it and give a metal casting; and
- removal of the metal casting from the casting mold.

**Revendications**

1. Matériau de moulage pour la fabrication de pièces moulées pour l'industrie de la fonderie, en particulier de masselottes isolantes ou exothermiques et autres entonnoirs de remplissage et éléments d'alimentation pour des moules de coulée, comprenant au moins :

- au moins 10 % en poids d'un matériau résistant au feu poreux, lequel présente une structure de pore ouverte continue ;
- un liant pour durcir le matériau de moulage ;
- le cas échéant, une charge résistante au feu ;
- une quantité d'un oxyde d'aluminium réactif ayant une surface spécifique d'au moins 0,5 $m^2$/g et un diamètre de particule moyen ($D_{50}$) de 0,5 à 8 $\mu$m.

**2.** Matériau de moulage selon la revendication 1, **caractérisé en ce que** le matériau résistant au feu poreux a une masse volumique inférieure à 0,5 kg/l.

**3.** Matériau de moulage selon la revendication 1 ou 2, **caractérisé en ce que** le matériau résistant au feu poreux est choisi parmi la pierre ponce, le schiste expansé, la perlite, la vermiculite, le sable calcaire ou la lave expansée « Schaumlava » ainsi que leurs mélanges.

**4.** Matériau de moulage selon l'une quelconque des revendications précédentes, **caractérisé en ce que** le matériau de moulage a un indice de perméabilité aux gaz (Gd) supérieur à 150, mesuré sur une éprouvette durcie.

**5.** Matériau de moulage selon l'une quelconque des revendications précédentes, **caractérisé en ce que** le matériau résistant au feu présente une quantité de $SiO_2$ inférieure à 60 % en poids.

**6.** Matériau de moulage selon l'une quelconque des revendications précédentes, **caractérisé en ce que** le matériau résistant au feu est formé au moins en partie de chamotte.

**7.** Matériau de moulage selon la revendication 6, **caractérisé en ce que** la quantité de chamotte, rapportée au poids de la charge résistante au feu, est d'au moins 50 % en poids.

**8.** Matériau de moulage selon l'une quelconque des revendications 6 ou 7, **caractérisé en ce que** l'argile réfractaire contient au moins 30 % en poids d'oxyde d'aluminium.

**9.** Matériau de moulage selon l'une quelconque des revendications précédentes, **caractérisé en ce que** la quantité de la charge résistante au feu, rapportée au poids du matériau de moulage est comprise entre 5 et 60 % en poids.

**10.** Matériau de moulage selon l'une quelconque des revendications précédentes, **caractérisé en ce que** le liant est choisi parmi les liants pour procédé en boîte froide, les liants pour procédé en boîte chaude et le silicate de soude.

**11.** Matériau de moulage selon la revendication 10, **caractérisé en ce que** le liant pour procédé en boîte froide est choisi dans le groupe des résines phénoluréthane, lesquelles sont activées par une amine, les résines époxy-acryliques, lesquelles sont activées par le $SO_2$, les résines phénoliques alcalines, lesquelles sont activées par le $CO_2$ ou par le formiate de méthyle, et du silicate de soude, lequel est activé par le $CO_2$.

**12.** Matériau de moulage selon l'une quelconque des revendications précédentes, **caractérisé en ce que** l'oxyde d'aluminium réactif, rapporté au poids du matériau de moulage, est contenu en une quantité supérieure à 2 % en poids, de préférence supérieure à 5 % en poids.

**13.** Matériau de moulage selon l'une quelconque des revendications précédentes, **caractérisé en ce que** l'oxyde d'aluminium réactif présente les propriétés suivantes :

| | |
|---|---|
| teneur en $Al_2O_3$ : | > 90 % ; |
| teneur en groupes OH : | < 5 % ; |
| surface spécifique (BET) : | 1 à 10 $m^2$/g ; |
| diamètre de particule moyen ($D_{50}$) : | 0,5 à 15 $\mu$m. |

**14.** Matériau de moulage selon l'une quelconque des revendications précédentes, **caractérisé en ce que** le matériau résistant au feu poreux présente un volume de pore d'au moins 50 %.

**15.** Matériau de moulage selon l'une quelconque des revendications précédentes, **caractérisé en ce que** la quantité du matériau résistant au feu poreux, rapportée au poids du matériau de moulage est d'au moins 15 % en poids, de préférence comprise entre 28 et 40 % en poids, en particulier comprise entre 20 et 25 % en poids.

16. Matériau de moulage selon l'une quelconque des revendications précédentes, **caractérisé en ce que** le matériau de moulage contient de la poudre d'aluminium et/ou de la poudre de magnésium ainsi qu'un agent d'oxydation.

17. Procédé de fabrication d'une pièce moulée pour l'industrie de la fonderie, en particulier d'une masselotte et d'autres éléments pour entonnoir de remplissage ou d'éléments d'alimentation pour des moules de coulée, comprenant les étapes consistant à :

   - déposer un matériau de moulage selon l'une quelconque des revendications 1 à 16 dans un moule pour obtenir une pièce moulée non durcie ;
   - durcir la pièce moulée non durcie pour obtenir une pièce moulée durcie ; et
   - retirer la pièce moulée durcie du moule.

18. Procédé selon la revendication 17, **caractérisé en ce que** la pièce moulée non durcie est durcie, par chauffage de la pièce moulée non durcie.

19. Pièce moulée pour l'industrie de la fonderie, en particulier masselotte, entonnoir de remplissage ou élément d'alimentation pour des moules de coulée, obtenus par un procédé selon l'une quelconque des revendications 17 ou 18.

20. Pièce moulée selon la revendication 19, **caractérisée en ce que** la pièce moulée, en particulier la masselotte, l'élément d'entonnoir de remplissage ou l'élément d'alimentation pour des moules de coulée, présente un indice de perméabilité aux gaz (Gd) supérieur à 150.

21. Utilisation d'une pièce moulée, en particulier d'une masselotte, d'un entonnoir de remplissage ou d'un élément d'alimentation selon l'une quelconque des revendications 19 ou 20, dans un procédé pour couler une pièce coulée en métal, comprenant les étapes consistant à :

   - préparer une ébauche dans une enceinte de moulage ;
   - adapter au moins une pièce moulée, en particulier une masselotte, un élément d'entonnoir de remplissage ou un élément d'alimentation pour des moules de coulée, selon l'une quelconque des revendications 17 ou 18 à l'ébauche ;
   - remplir et compacter et durcir une matière de moulage dans l'enceinte de moulage, de sorte qu'un moule de coulée soit obtenu ;
   - retirer le moule de coulée de l'enceinte de moulage ;
   - remplir le moule de coulée de métal liquide ;
   - refroidir le métal pour solidification et obtention d'une pièce coulée en métal ; et
   - retirer la pièce coulée en métal du moule.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0888199 B1
- EP 0913215 B1
- WO 0073236 A2
- US 3409579 A
- US 4526219 A